# FASCICULE DE BREVET EUROPEEN

(11) **EP 2 407 416 B1**
(45) Date de publication et mention de la délivrance du brevet: **07.10.2015**
(21) Numéro de dépôt: 11172540.4
(22) Date de dépôt: 04.07.2011
(51) Int. Cl.: G02B 26/00, F04B 43/04, G02B 3/14

(54) **Procédé de fabrication d'un dispositif à membrane emprisonnant un fluide**
Herstellungsverfahren einer Vorrichtung mit einer Membran, die eine Flüssigkeit einschließt
Method for manufacturing a membrane device retaining a fluid

(30) Priorité: 12.07.2010 FR 1055664
(43) Date de publication de la demande: 18.01.2012
(73) Titulaire: Commissariat à l'Énergie Atomique et aux Énergies Alternatives, 75015 Paris (FR)
(72) Inventeur: Pouydebasque, Arnaud, 38420 Le Versoud (FR); Bolis, Sébastien, 38920 Crolles (FR); Jacquet, Fabrice, 38220 Saint Pierre de Mesage (FR)
(74) Mandataire: Ilgart, Jean-Christophe

(56) Documents cités:
- WO-A1-2005/109043
- FR-A1- 2 889 633
- US-A- 3 718 140
- US-A1- 2002 106 867
- US-A1- 2008 053 236
- CHANG-HAN YUN ET AL: "Fabrication of Silicon and Oxide Membranes Over Cavities Using Ion-Cut Layer Transfer", JOURNAL OF MICROELECTROMECHANICAL SYSTEMS, IEEE SERVICE CENTER, PISCATAWAY, NJ, US, vol. 9, no. 4, 1 décembre 2000 (2000-12-01), XP011034603, ISSN: 1057-7157

## Description

### DOMAINE TECHNIQUE

La présente invention concerne la fabrication de dispositifs à membrane emprisonnant un fluide.

Dans la majorité des applications le fluide sera incompressible. Un fluide est dit incompressible lorsque son volume demeure quasiment constant sous l'action d'une pression externe. Dans ce contexte le fluide peut être un liquide ou un gel, les gaz n'étant pas incompressibles.

Un tel dispositif à membrane emprisonnant un fluide incompressible peut servir par exemple de lentille à distance focale ajustable, de miroir à courbure ajustable ou de micro pompe.

L'invention peut bien sûr s'appliquer à d'autres dispositifs nécessitant de placer une membrane sur une cavité contenant un fluide qu'il soit incompressible ou non.

### ÉTAT DE LA TECHNIQUE ANTÉRIEURE

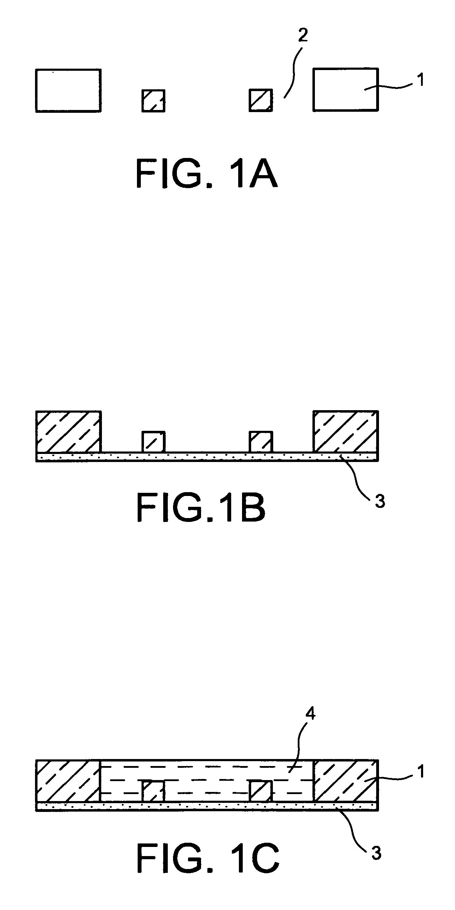

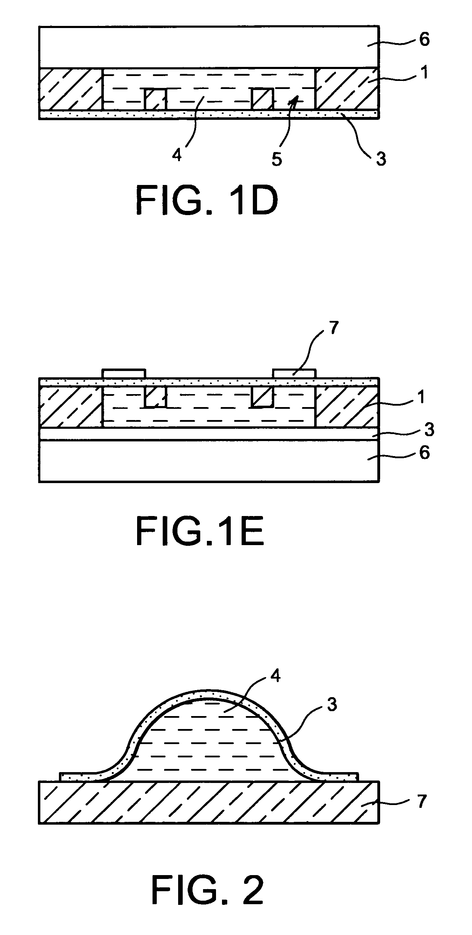

Deux types de techniques sont généralement utilisés pour emprisonner un fluide sous une membrane. On va décrire un premier procédé qui se base sur l'enseignement du document [1] dont les références se trouvent en fin de description. On part d'un cadre 1 possédant une ou plusieurs ouvertures traversantes 2 (figure 1A). Les bords du cadre 1 sont destinés à délimiter au moins une cavité qui contiendra le fluide 4, cette cavité sera obturée par une membrane 3. On reporte sur une des faces principales du cadre 1, la membrane 3 et on la colle au cadre 1. On crée alors la cavité 5 (figure 1B). Si le fluide 4 est un liquide ou un gel, on remplit la cavité 5 du liquide ou du gel (figure 1C). Elle est déjà remplie si le gaz est de l'air. On vient ensuite solidariser un substrat 6 sur l'autre face principale du cadre 1, il va fermer la cavité 5 pour empêcher que le fluide 4 ne s'échappe (figure 1D). En variante, il est possible de l'introduire dans la cavité 5 une fois que le substrat 6 a été solidarisé au cadre 1 par un trou prévu à cet effet dans le substrat. Ce trou sera ensuite bouché après le remplissage. Cette variante n'est pas illustrée. La dernière figure 1E montre la membrane équipée de moyens d'actionnement 7 visant à la faire se déplacer pour chasser le fluide 4 vers la partie centrale de la cavité 5.

Le document [2] dont les références se trouvent en fin de description montre également une membrane directement reportée sur un cadre rigide ajouré assemblé à un substrat transparent.

Un inconvénient du procédé décrit dans ces documents est qu'il ne convient que pour des membranes suffisamment épaisses, typiquement d'épaisseur supérieure à 50 micromètres pour une membrane en polydiméthylsiloxane. Des membranes plus fines, très souples ou très grandes sont trop fragiles pour être reportées sur le cadre. Les applications listées plus haut requièrent des membranes d'épaisseur très petites, inférieures à quelques dizaines de micromètres, et suffisamment souples pour pouvoir se déformer de manière significative lorsque l'on actionne les moyens d'actionnement.

De plus, les moyens d'actionnement ne peuvent se trouver que sur la face de la membrane opposée au fluide sinon, lors du report de la membrane les risques de déformation et d'endommagement de la membrane sont importants. Dans le cadre d'une lentille liquide à actionnement électrostatique, il est bien préférable de positionner les électrodes d'une paire d'électrodes formant les moyens d'actionnement en contact avec le fluide pour optimiser les forces engendrées.

Encore un autre inconvénient est que la déformée de la membrane au repos dépend fortement d'une part du cordon de colle utilisé pour solidariser la membrane au cadre et d'autre part, de la quantité de fluide emprisonné. La prévision de cette déformée au repos est extrêmement difficile et en particulier, il est quasiment impossible d'obtenir une membrane plane ou quasi-plane au repos.

Un autre procédé connu, se basant sur l'enseignement du document [3] dont les références se trouvent en fin de description, va être décrit ci-dessous. On part d'un substrat 7 qui délimite au moins une cavité ou qui peut être plan comme illustré sur la figure 2. On dépose un liquide 4 directement sur le substrat 7 puis la membrane 3 directement sur le liquide 4 par un procédé de dépôt chimique en phase vapeur CVD. Un des seuls matériaux convenant pour ce dépôt chimique en phase vapeur est le parylène (polymère de poly-p-xylylène). La rigidité de ce matériau est, pour un grand nombre d'applications, trop importante par rapport à celle d'autres matériaux qui conviennent mieux mais ne peuvent être déposés par CVD. Le module d'Young du parylène est de l'ordre de 3 GPa alors que des dérivés de silicone ont des modules d'Young de l'ordre de 100 MPa.

Un autre inconvénient de ce procédé est qu'il se pratique à basse pression, de l'ordre de 4.10⁻² HPa, ce qui exclut d'utiliser comme fluide, un gaz et la plupart des liquides qui vont s'évaporer lors du dépôt CVD.

Comme la technique décrite précédemment, il n'est pas possible de fonctionnaliser la membrane avec des moyens d'actionnement situés côté liquide.

Avec cette technique également, il est difficile de maîtriser la déformée de la membrane au repos, cette déformée dépend de la forme de la goutte de liquide déposée sur le substrat ainsi que de son comportement sous vide au cours du dépôt.

Une autre technique, décrite par exemple dans la demande de brevet FR 2 919 073, consiste à déposer un matériau sacrificiel dans une cavité dont est équipé un support, à déposer la membrane sur le matériau sacrificiel en la faisant déborder sur le support de manière à l'y ancrer, à éliminer le matériau sacrificiel par un trou percé dans le support et à le remplacer par le fluide, puis à boucher le trou du support. L'inconvénient de cette technique est dû au matériau sacrificiel. En effet, il est difficile de l'éliminer, cela prend beaucoup de temps, plusieurs dizaines d'heures, et on n'est jamais sûr que tout à été éliminé. S'il reste du matériau sacrificiel, il risque de perturber le fonctionnement de moyens d'actionnement qui seraient baignés par le fluide ou bien de polluer le fluide.

La demande de brevet US 2002/106867 décrit un procédé de transfert d'une membrane d'un substrat à un autre, dans lequel l'air résiduel se trouvant entre la membrane et des plots est pompé.

### EXPOSÉ DE L'INVENTION

La présente invention a justement comme but de proposer un procédé de réalisation d'un dispositif à membrane emprisonnant un fluide qui ne présente pas les limitations et difficultés mentionnées ci-dessus.

En particulier, le procédé selon l'invention permet d'utiliser une grande gamme de fluides et de matériaux pour la membrane.

Un autre but de l'invention est de réaliser un dispositif à membrane emprisonnant un fluide dans lequel la déformée de la membrane au repos peut être prévue à l'avance, cette déformée pouvant être nulle.

Encore un autre but de l'invention est de réaliser un dispositif à membrane emprisonnant un fluide dans lequel la membrane peut être équipée d'au moins un instrument tel des moyens d'actionnement ou un capteur disposé du côté du fluide.

Un but supplémentaire de l'invention est de réaliser un dispositif à membrane emprisonnant un fluide sans à avoir à recourir à l'utilisation d'un matériau sacrificiel qui pourrait poser des problèmes lors de l'utilisation du dispositif à membrane s'il n'a pas été correctement éliminé.

Pour atteindre ces buts, l'invention concerne plus précisément un procédé de réalisation d'un dispositif à membrane contribuant à emprisonner un fluide contenu dans une cavité en accord avec la revendication 1.

Dans ce procédé, on fournit deux substrats,
on dispose une membrane sur l'un et/ou sur l'autre des substrats,
on forme une ou plusieurs parois contribuant à délimiter latéralement la cavité, ces parois étant situées sur ou dans l'un des substrats et/ou sur ou dans l'autre des substrats, cette cavité étant destinée à contenir le fluide,
on assemble les deux substrats l'un à l'autre en les superposant de manière à parfaire la cavité, la membrane ou chaque membrane contribuant également à délimiter la cavité,
on emprisonne du fluide dans la cavité entre les substrats, la membrane ou chaque membrane étant baignée par le fluide,
on ôte au moins une partie de l'un des substrats et/ou de l'autre des substrats dans la mesure où l'un et/ou l'autre des substrats sont équipés d'une membrane pour libérer la membrane au moins dans sa partie centrale, la membrane étant au moins en partie maintenue par le fluide lors de sa libération.

L'expression « ces parois étant situées sur l'un des substrats et/ou sur l'autre des substrats » signifie par-dessus le substrat concerné.

Le fluide peut être déposé sur l'un des substrats ou réparti sur les deux substrats avant l'assemblage des deux substrats.

En variante, le fluide peut être introduit dans la cavité une fois que les deux substrats sont assemblés.

L'introduction peut se faire par l'intermédiaire d'au moins un trou traversant dans un des substrats et/ou dans une paroi.

Pour maîtriser l'état de contrainte de la membrane ou de chaque membrane une fois libérée, on peut insérer une couche tampon entre l'un des substrats et la membrane et/ou entre l'autre des substrats et la membrane, cette couche tampon ayant une contrainte en tension voulue de manière à ce que la membrane ait une contrainte en tension déterminée lors de sa libération.

On peut éliminer la couche tampon pour libérer la membrane au moins dans sa partie centrale.

On peut équiper la membrane et/ou l'un des substrats d'au moins un instrument tel des moyens d'actionnement, un capteur.

L'instrument est de préférence en contact avec le fluide.

La formation des parois sur l'un des substrats peut se faire par dépôt d'un matériau en cordon, ce matériau pouvant être adhésif, et/ou par gravure du substrat et/ou par dépôt d'une couche de modelage sur le substrat, puis gravure de la couche de modelage et/ou par utilisation d'une couche de modelage préformée.

La membrane peut être déposée par dépôt chimique en phase vapeur si elle est minérale ou en parylène, ou bien par dépôt à la tournette ou encore par placage d'un film si elle est organique.

L'assemblage des deux substrats peut se faire par collage.

Le fluide peut être déposé ou introduit par une technique dite de dispense ou bien par projection.

Le fluide peut être aussi bien sous forme de liquide ou de gel.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels:
les figures 1A à 1E, déjà décrites, montrent différentes étapes d'un procédé de l'art antérieur pour la réalisation d'un dispositif à membrane contribuant à emprisonner un fluide;
la figure 2, déjà décrite, montre en coupe un dispositif à membrane contribuant à emprisonner un fluide obtenu par un procédé de l'art antérieur ;
les figures 3A à 3E, montrent différentes étapes d'un exemple de procédé de réalisation d'un dispositif à membrane contribuant à emprisonner un fluide selon l'invention ;
les figures 4A à 4E, montrent différentes étapes d'un autre exemple de procédé de réalisation d'un dispositif à membrane contribuant à emprisonner un fluide selon l'invention ;
les figures 5A à 5G, montrent différentes étapes d'un troisième exemple de procédé de réalisation d'un dispositif à membrane contribuant à emprisonner un fluide selon l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

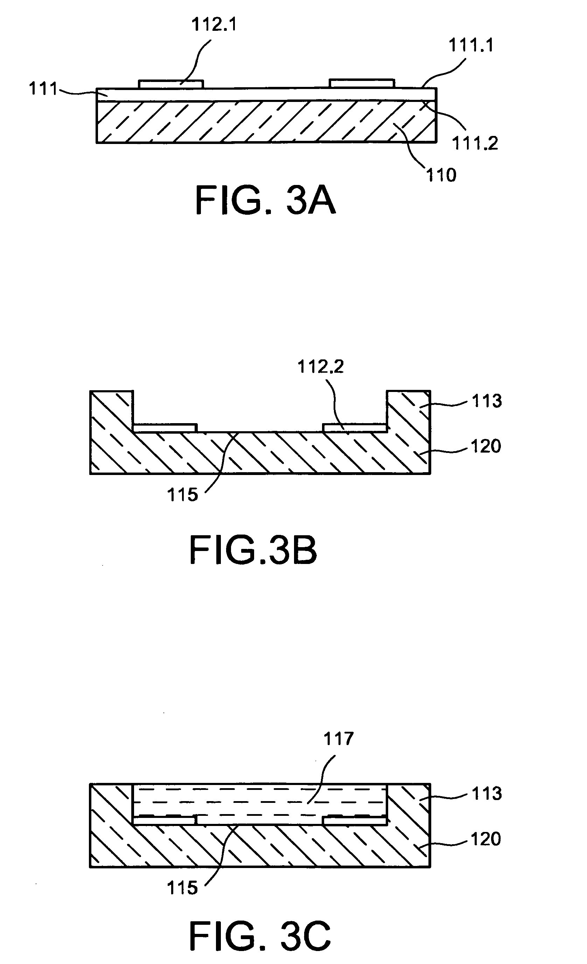

On va maintenant décrire un premier exemple du procédé objet de l'invention en se référant aux figures 3A à 3E.

On part d'un premier substrat 110 (figure 3A) et d'un second substrat 120 (figure 3B). Les substrats 110, 120 peuvent être en matériau minéral tel que le verre, le quartz, le saphir, le silicium ou un autre matériau semi-conducteur, un métal. En variante, ils peuvent être réalisés en matériau organique tel que le polyéthylène téréphtalate PET, le polyéthylène naphtalate PEN, le polymétacrylate de méthyle PMMA, le polycarbonate PC. Si l'application du dispositif obtenu par le procédé selon l'invention est une lentille liquide à distance focale variable, un des substrats restant en fin de procédé pour emprisonner le fluide sera choisi transparent au rayonnement optique devant traverser la lentille.

On place une membrane 111 sur l'un des substrats, en l'occurrence, dans cet exemple sur le premier substrat 110. La membrane 111 recouvre une des faces principales du premier substrat 110, elle possède une face libre 111.1 et une face 111.2 en contact avec le premier substrat 110. En variante, on pourrait placer une membrane sur chacun des substrats comme on le verra plus loin.

La membrane 111 pourra être réalisée être réalisée à base de matériaux organiques tels que le polydiméthylsiloxane, le polyméthacrylate de méthyle, le polyéthylène téréphtalate, le polycarbonate, le parylène, les résines époxydes ou silicones, les résines photosensibles, ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium, le cuivre, le nickel. Dans l'application lentille liquide, la membrane sera transparente au rayonnement optique devant la traverser et dans l'application miroir, elle sera réfléchissante au rayonnement optique incident.

La membrane 111 peut être déposée sur le premier substrat par dépôt chimique en phase vapeur CVD notamment si elle est minérale ou en parylène ou bien par dépôt à la tournette pour d'autres matériaux organiques. Un autre moyen est d'utiliser pour la membrane 111 un film organique, par exemple en rouleau ou en plaque que l'on vient plaquer sur le premier substrat. L'utilisation de résines photosensibles permet une fois que la membrane a été déposée de la graver avec une simple étape de lithographie pour délimiter son contour.

On peut équiper la membrane 111 d'au moins un instrument 112.1. Par instrument, on entend un objet fabriqué en vue d'une utilisation particulière. Cet instrument peut être en totalité ou en partie un moyen d'actionnement de la membrane, un capteur, tel un capteur environnemental apte à détecter par exemple l'humidité, la pression, la température, la nature des gaz résiduels ou tel un capteur de mouvement comme par exemple un gyroscope, un accéléromètre, un magnétomètre, ou autre.

Dans l'exemple de la figure 3A, l'instrument 112.1 est représenté comme une des électrodes d'un dispositif d'actionnement électrostatique à au moins une paire d'électrodes placées en regard. Il est réalisé sur la face libre 111.1 de la membrane 111. On verra que le second substrat 120 sera équipé de l'autre électrode de la paire.

L'instrument 112.1 peut être, dans le cas où il s'agit d'un moyen d'actionnement de la membrane, une électrode conductrice de l'électricité comme on vient de le décrire, un élément en matériau piézoélectrique, en matériau magnétique, en polymère électroactif qui se déforme sous l'effet d'un courant électrique.

On forme au moins une paroi 113 sur au moins un des substrats 110, 120, cette paroi 113 contribuant à délimiter latéralement une cavité 114 devant accueillir un fluide. La membrane 111 sert également à emprisonner le fluide dans la cavité 114 (figure 3B).

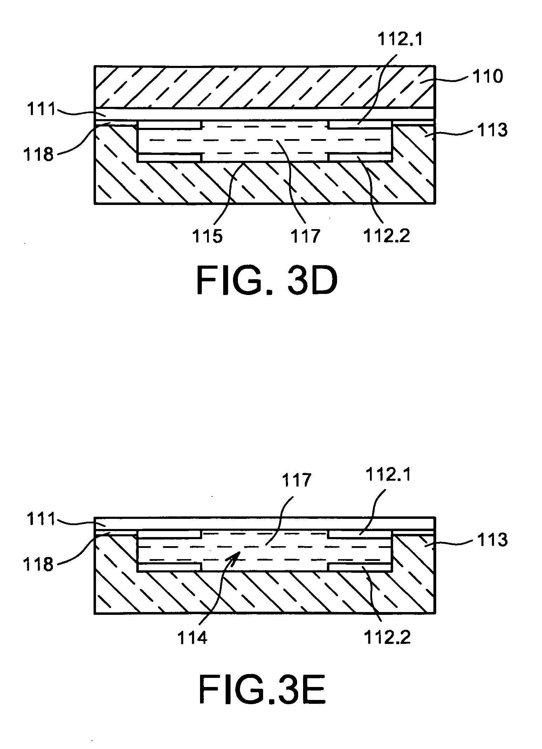

Dans l'exemple des figures 3, la paroi 114 est réalisée sur le second substrat 120. Le second substrat 120 va alors servir de fond 115 à la cavité 114. Il est bien entendu que l'on pourrait réaliser une paroi sur le premier substrat, du côté de la membrane ou sur les deux substrats, dans ce cas, les parois des deux substrats devront coopérer pour délimiter la cavité.

Dans cet exemple des figures 3, la paroi 113 est réalisée en gravant une cuvette 116 dans la partie centrale du second substrat 120, les bords de la cuvette formant la paroi 113 et le fond de la cuvette 116 formant le fond 115 de la cavité.

Si le second substrat 120 est en silicium, la gravure peut se faire par gravure ionique réactive, par gravure physique au plasma par exemple de difluorure de xénon XeF₂ ou d'hexafluorure de soufre SF₆, par gravure chimique humide avec par exemple de l'hydroxyde de tétraméthylammonium TMAH ou de l'hydroxyde de potassium KOH.

Il est bien entendu que l'on pourrait procéder autrement pour réaliser la paroi de la cavité, par exemple en déposant un cordon de matériau approprié sur le second substrat. On peut utiliser pour former le cordon, une résine de collage négative telle que du benzocyclobutène BCB ou du siloxane polymère SiNR. Le cordon permet à la fois de définir la cavité et de sceller le premier et le second substrat. D'autres colles peuvent être envisagées telles que les colles thermodurcissables ou les colles durcissant sous l'effet des ultraviolets.

On peut également réaliser un cordon en effectuant une étape dépôt sur le second substrat d'un matériau minéral tel que l'oxyde de silicium ou le nitrure de silicium, une étape de lithographie et de gravure du matériau déposé.

On équipe le fond 115 de la cuvette 116 d'un autre instrument 112.2 qui, dans cet exemple, est une autre électrode devant coopérer et former une paire avec l'électrode 112.1 portée par la membrane 111 (figure 3B).

On emplit la cuvette du fluide 117 (figure 3C). Il est bien entendu que cette étape pourrait avoir lieu ultérieurement. Comme énoncé précédemment le fluide 117 peut être un liquide ou un gel. Dans les applications de lentille liquide à distance focale variable, de miroir à courbure ajustable ou de micropompe le fluide est incompressible. On obtient alors de meilleures performances lors de l'actionnement.

Le remplissage de la cuvette 116 peut se faire à l'aide d'une seringue ou analogue c'est-à-dire par une technique dite de dispense ou bien par projection à partir d'une buse.

Le volume de fluide placé dans la cuvette 116 doit être adapté au volume qu'aura la cavité une fois fermée. On peut désirer que la membrane 111 soit légèrement bombée ou qu'elle soit plane au repos.

Le fond 115 de la cuvette 116 doit avoir une mouillabilité telle que le liquide ou le gel s'étalent le mieux possible sur le fond 115, pour que tout le volume de la cavité 114 puisse être aisément rempli.

Le fluide peut être un liquide tel que le carbonate de propylène, l'eau, un liquide d'indice, une huile optique, un liquide ionique, un gel tel qu'un élastomère par exemple du polydiméthylsiloxane PDMS.

En variante notamment si le fluide 117 est un liquide ou un gel, on pourrait déposer le fluide sur le premier substrat 110, côté membrane 111, ou déposer le fluide 117 à la fois sur le premier substrat 110 et sur le second substrat 120.

On assemble ensuite le premier substrat 110 et le second substrat 120 en les superposant et en plaçant la membrane en vis-à-vis de la cuvette, de manière à parfaire la cavité et emprisonner le fluide 117 (figure 3D).

Cet assemblage peut se faire par collage, en choisissant une colle 118 et un mode de collage compatibles avec le fluide 117 à emprisonner. En particulier, les conditions de température et de pression doivent éviter l'évaporation du fluide 117.

Un collage à activation par ultraviolets peut être envisagé pour des fluides 117 s'évaporant à température ambiante. Cela suppose bien évidemment que l'un des substrats 110, 120, au moins, est transparent aux ultraviolets. Certains collages thermiques peuvent se faire dès 80°C. Le collage peut se faire dans une enceinte dans laquelle on contrôle l'atmosphère, la pression et la température de manière à ce que fluide ne s'évapore pas.

On peut ensuite éliminer le premier substrat 110 pour libérer la membrane 111. Dans l'exemple de la figure 3E, le premier substrat 110 est éliminé dans sa totalité. Cette élimination totale convient si la membrane 111 est fixée de manière étanche à la paroi 113 de la cavité 114. Si des risques de décollement existent, il est préférable de n'éliminer le premier substrat que dans sa partie centrale. La membrane est au moins en partie maintenue par le fluide lors de sa libération.

L'élimination du premier substrat 110 peut se faire par exemple par gravure ionique réactive (RIE reactive ion etching) et de préférence par gravure ionique réactive profonde (DRIE deep reactive ion etching). Ce qui distingue les deux méthodes, c'est la profondeur de gravure. Les profondeurs typiques des gravures RIE sont limitées à quelques micromètres et les vitesses de gravure vont jusqu'à environ un micromètre par minute. La gravure DRIE grave des motifs beaucoup plus profonds, jusqu'à environ 600 micromètres voire plus, à des vitesses de l'ordre de la vingtaine de micromètres par minute. La gravure DRIE convient donc bien pour cette application.

Si le premier substrat 110 est en silicium, il est également possible de faire une gravure physique au plasma par exemple de XeF₂ ou de SF₆ ou une gravure chimique humide avec par exemple de l'hydroxyde de tétraméthylammonium TMAH ou de l'hydroxyde de potassium KOH.

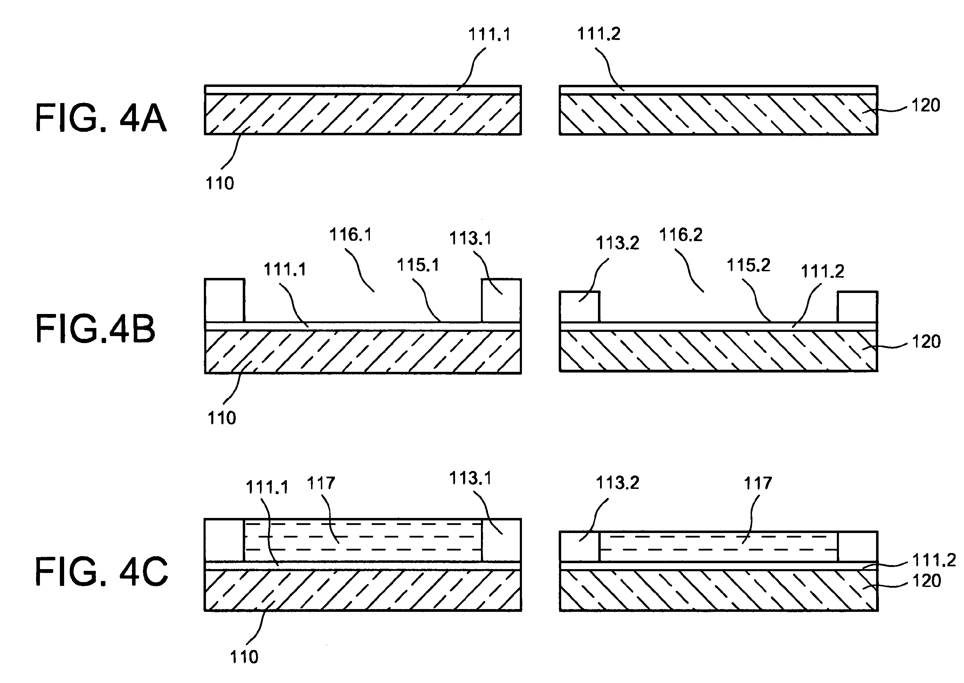

En se référant aux figures 4A à 4E, on va décrire un autre exemple du procédé selon l'invention. On part toujours d'un premier substrat 110 et d'un deuxième substrat 120, mais maintenant on place une membrane 111.1, 111.2 sur chacun des substrats 110, 120 (figure 4A).

On forme une cuvette 116.1, 116.2 sur chacun des substrats 110, 120, délimitée par une ou plusieurs parois 113.1, 113.2 (figure 4B). Les parois 113.1, 113.2 de la figure 4B contribuent à délimiter latéralement une cavité, elles sont situées au-dessus des substrats 110, 120. Dans cet exemple les parois 113.1, 113.2 peuvent être formées par un cordon de colle, par exemple, de la résine de collage négative telle que par exemple la résine à base de benzocyclobutène BCB ou de siloxane polymère (SiNR). L'utilisation de tels matériaux permet à la fois de former la paroi de la cavité 114 devant accueillir le fluide et ultérieurement d'assembler les deux substrats. Ces parois 113.1, 113.2 vont délimiter la cavité devant accueillir le fluide.

Les deux cordons de colle 113.1, 113.2 n'ont pas forcement la même hauteur, ils peuvent avoir des hauteurs constantes ou différentes selon l'endroit. Ils sont complémentaires en termes d'épaisseur, la cavité 114 une fois achevée ayant une paroi sensiblement constante 114. Les cordons 113.1, 113.2 peuvent être discontinus ou non et complémentaires en termes d'étendue sur les substrats 110, 120, ce qui signifie que l'un va s'étendre sur au moins une première portion du périmètre de la cavité et l'autre sur au moins une seconde partie du périmètre de la cavité, les deux parties couvrant tout le périmètre de la cavité achevée.

D'autres types de colles peuvent bien sûr être employés comme par exemple des colles thermodurcissables ou photodurcissables aux UV.

Ces colles peuvent être déposées sur les substrats par sérigraphie ou par dispense.

Des cordons 113.1, 113.2 en matériau non adhésif pourraient bien sûr être utilisés. Les cordons non adhésifs sont généralement réalisés en matériaux polymérisés tels que le benzocyclobutène BCB ou la résine SU8 contrairement aux cordons adhésifs. On peut aussi réaliser les cordons non adhésifs, comme on l'a décrit plus haut, par des étapes de dépôt, lithographie et gravure de matériaux minéraux tels que l'oxyde de silicium ou le nitrure de silicium.

En variante, un cordon pourrait être adhésif et pas l'autre, si on prévoit au moins deux cordons.

On peut ensuite déposer, pour chacun des substrats 110, 120, dans l'espace délimité par le cordon de colle 113.1, 113.2, si celui-ci est continu, du fluide 117 (figure 4C). Si le cordon 113.1, 113.2 n'est pas continu, le fluide ne pourra être introduit dans la cavité qu'après l'assemblage des deux substrats comme on le verra ultérieurement.

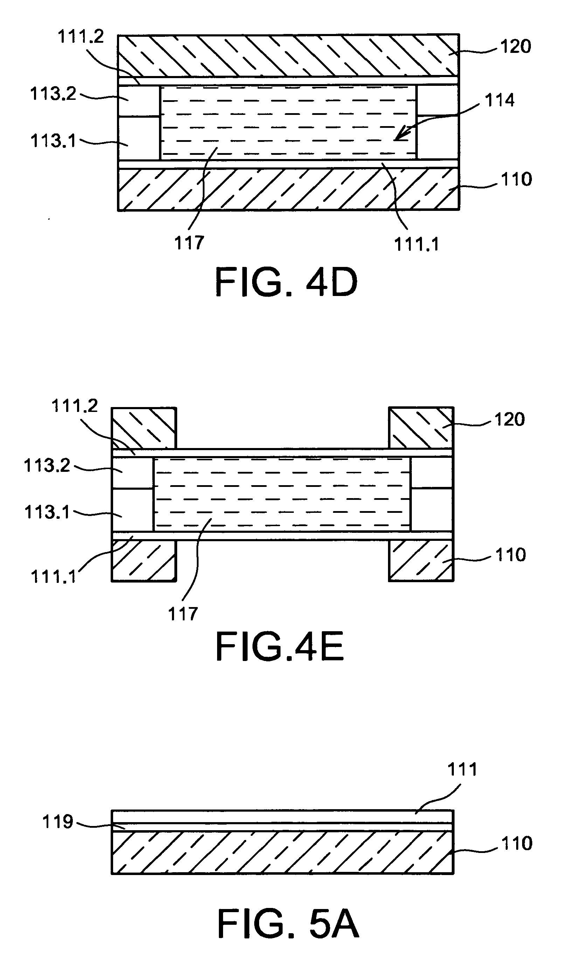

Dans l'exemple décrit aux figures 4, chaque cuvette 116.1, 116.2 a un fond 115.1, 115.2 formé par la membrane et pas directement le substrat comme dans l'exemple précédent.

On assemble ensuite les deux substrats 110, 120 l'un à l'autre en les empilant. Les cuvettes 116.1, 116.2 sont disposées face à face de manière à emprisonner le fluide 117 entre les deux membranes 111.1, 111.2 (figure 4D). Si au moins un des cordons 113.1, 113.2 utilisés pour délimiter la cavité est adhésif, cet assemblage se fait sans problème. Si aucun des cordons n'est adhésif, on place de la colle sur au moins un des cordons. Cet assemblage peut se faire avec comme fluide un liquide car les volumes sont faibles et les tensions de surface sont suffisantes.

On peut ensuite éliminer les deux substrats 110, 120 totalement ou partiellement, pour libérer les deux membranes 111.1, 111.2 au moins dans leur partie centrale.

Sur la figure 4E, on a ôté partiellement seulement les substrats 110, 120.

Sur les figures 4, on n'a pas représenté d'instruments, mais bien sûr on les réaliserait comme décrit dans le premier exemple illustré aux figures 3.

Dans le premier exemple du procédé de l'invention décrit aux figures 3, on avait mentionné que l'on pouvait réaliser une paroi sur le premier substrat, du côté de la membrane, cette configuration est illustrée sur la figure 4B .

Lors de la description du premier exemple, on avait indiqué que le fond 115 de la cuvette 116 devait laisser s'étaler le plus possible le fluide 117. Dans le second exemple, le fond est réalisé par les membranes. Cette condition est toujours souhaitable dans le second exemple, mais, de plus, dans la mesure où les parois délimitant la cavité ne sont généralement pas dans le même matériau que les fonds, il est préférable, pour chaque substrat que la paroi soit réalisée dans un matériau ayant une mouillabilité inférieure à celle du fond de manière à éviter un débordement de fluide.

Sur les figures 5A à 5G, on a représenté différentes étapes d'une autre variante du procédé selon l'invention. Dans cette variante, on n'a prévu qu'une seule membrane et le remplissage de la cavité ne se fait qu'après l'assemblage des deux substrats.

Si on désire maîtriser l'état de contrainte de la membrane lors de sa libération, cette contrainte étant de préférence une tension pour éviter tout phénomène de flambage au repos, il est préconisé d'insérer une couche tampon 119 entre le premier substrat 110 et la membrane 111. C'est ce que la figure 5A illustre. Cette couche tampon possède l'état de contrainte souhaité pour la membrane. La contrainte de la membrane est déterminable par simulation à partir de paramètres liés à la membrane, à la couche tampon et éventuellement à au moins une autre couche qui serait présente, ces paramètres étant par exemple leur état de contrainte initial, leur module d'Young, leur épaisseur. Une fois libérée, la membrane n'aura pas la même contrainte que la couche tampon. La contrainte de la membrane libérée dépend des paramètres cités ci-dessus.

Cette couche tampon 119 peut être réalisée en oxyde de silicium ou en nitrure de silicium par exemple. Elle peut être réalisée par dépôt en phase vapeur activé par plasma PECVD. La couche tampon 119 aurait pu être utilisée dans les deux modes de réalisation précédents.

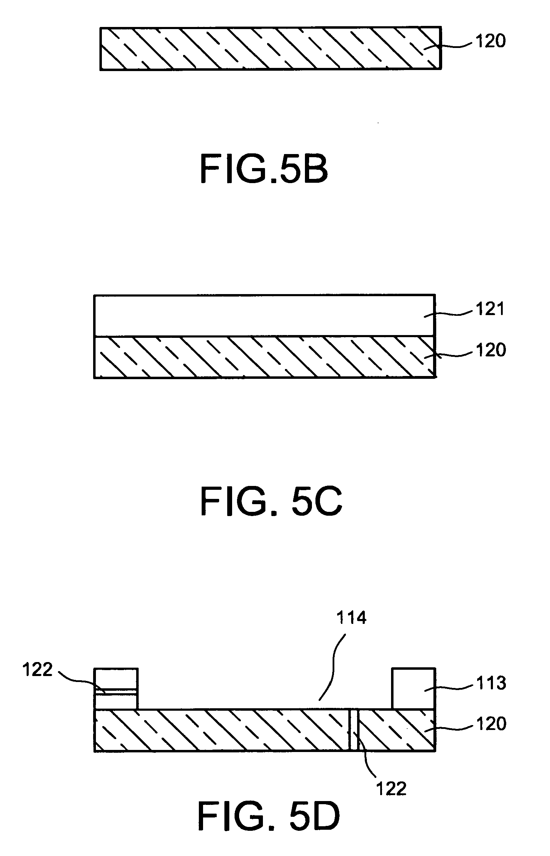

Le second substrat 120 va servir de base pour le modelage de la cavité (figure 5B). On dépose sur le second substrat 120 une couche 121 destinée à être modelée pour former la paroi 113 de la cavité (figure 5C).

Si on souhaite utiliser une couche à modeler préformée, on peut utiliser une couche emboutie par exemple en polyéthylène téréphtalate PET, en polyéthylène naphtalate PEN, en polyméthacrylate de méthyle PMMA, en polycarbonate PC.

En variante, la couche à modeler peut être obtenue par dépôt d'un matériau minéral, tel que de l'oxyde de silicium ou du nitrure de silicium et des opérations de lithographie et gravure. On ne conserve la couche à modeler 121 qu'au niveau de ce qui deviendra la paroi 113 de la cavité 114 (figure 5D).

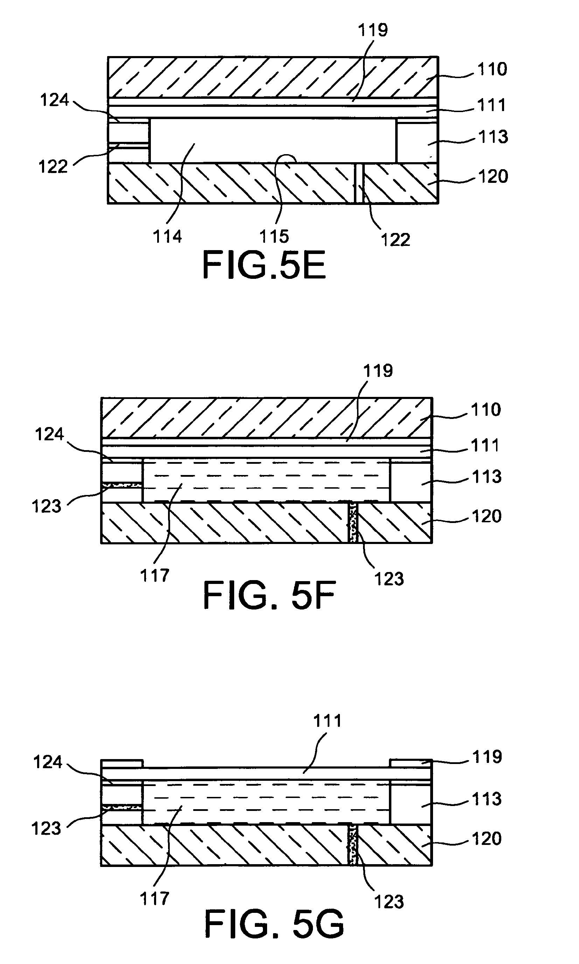

Sur la figure 5E, on a illustré l'assemblage des deux substrats 110, 120, pour finaliser la cavité 114. La membrane 111 vient se coller à la paroi 113 de la cavité 114. On a inséré un joint de colle 124 entre la membrane et la partie sommitale de la paroi 113 de la cavité 114.

On perce au moins un trou traversant 122 dans le second substrat et on injecte via ce trou traversant 121 le fluide 117. Le trou traversant 122 débouche au niveau du fond 115 de la cavité 114. Le trou traversant 117 est ensuite bouché, le bouchon portant la référence 123 (figure 5F).

Bien sûr, le trou traversant ne doit pas attaquer de membrane. Il est possible de faire le trou traversant pour le remplissage, dans la paroi de la cavité et pas dans son fond, cela convient particulièrement si les deux substrats sont recouverts d'une membrane. Sur les figures 5D à 5G, on a représenté à la fois un trou traversant dans le substrat 120 et dans la paroi 113.

Dans l'exemple décrit, les trous traversants 122 ont été percés avant l'assemblage des deux substrats. Si le substrat est en silicium, le perçage peut se faire DRIE ou par gravure humide. D'autres méthodes convenant également pour d'autres types de substrat sont le perçage laser, l'usinage, le sablage par exemple.

Il est possible de percer les trous traversants 122 après l'assemblage des deux substrats. Il faut juste éviter que des débris de substrat ou de paroi ne pénètrent dans la cavité et qu'ils y restent.

La figure 5G montre le premier substrat 110 qui a été éliminé totalement et la couche tampon 119 seulement partiellement. Elle subsiste au niveau de la paroi de la cavité. Elle aurait pu être éliminée totalement. La membrane 111 a une partie centrale qui est libérée.

On aurait pu, bien sûr, conserver partiellement le substrat comme sur la figure 4E. Il aurait également été possible d'éliminer totalement la couche tampon.

Il est préférable, notamment dans le cas où l'on désire ôter le substrat dans sa totalité, de choisir un matériau qui autorise un décollement de la couche tampon pour permettre le retrait du substrat.

La couche tampon 119 peut avoir une propriété d'adhésion temporaire. Dans ce cas, elle est totalement retirée. Il est également possible d'introduire, si la couche tampon n'a pas cette propriété d'adhésion temporaire, une couche supplémentaire entre la couche tampon et le substrat, ayant cette propriété d'adhésion temporaire.

On notera que la couche tampon peut servir également à contrôler la contrainte dans la membrane et/ou comme on vient de le décrire à retirer le substrat lorsqu'elle a cette propriété d'adhésion temporaire.

L'adhésion temporaire peut être obtenue par exemple avec un matériau dont l'adhésion diminue lorsque l'on augmente la température. On peut employer, par exemple, pour la couche tampon qui aurait cette propriété d'adhésion temporaire ou pour la couche supplémentaire de la colle de type HT 1010 de Brewer Science. S'il y a la couche supplémentaire, la couche tampon peut être en un autre matériau.

Si la couche tampon est en oxyde de silicium ou en nitrure de silicium par exemple, elle peut être éliminée, elle aussi, par gravure ionique réactive ou par gravure chimique humide avec par exemple de l'acide fluorhydrique pour l'oxyde de silicium ou de l'acide orthophosphorique pour le nitrure de silicium.

Par rapport aux documents [1], [2] et [3], le procédé selon l'invention permet d'élargir la gamme de matériaux utilisables pour la membrane notamment pour les faibles épaisseurs, inférieures à environ 50 micromètres, voire même inférieures à 10 micromètres et par exemple comprises entre 1 et 5 micromètres.

Il en est de même pour la gamme du type de liquides en comparaison de l'enseignement du document [2]. Cela permet d'optimiser le fonctionnement du dispositif, notamment en rendant le déplacement de la membrane plus efficace, puisqu'il est possible d'utiliser des matériaux plus souples que dans l'art antérieur.

Il est aussi possible d'équiper la membrane d'un instrument notamment en contact avec le fluide, ce qui n'était pas possible dans les procédés décrits dans les documents [1], [2] et [3].

Le procédé objet de l'invention permet, en libérant la membrane après assemblage des deux substrats et remplissage de la cavité avec le fluide, d'offrir à la membrane, lors de sa libération, un maintien mécanique par le fluide emprisonné dans la cavité.

Ainsi dans le cas où la membrane est soumise à des contraintes internes résiduelles, le fait de libérer la membrane après encapsulation permet au fluide qui est emprisonné et au contact avec elle de participer à son maintien et d'influer éventuellement sur sa déformation.

Si la membrane était libérée avant le remplissage, des déformations de celle-ci, par exemple de type flambage, pourraient entraver l'opération de remplissage avec le fluide.

Avec le procédé de l'invention, il est possible d'utiliser des membranes très souples et par exemple de faible épaisseur par rapport au diamètre. Par exemple, la membrane peut avoir une épaisseur inférieure à 10 micromètres pour des diamètres supérieurs au millimètre.

Une telle membrane peut avoir un module d'Young faible, par exemple inférieur à 10 GPa. Il est alors possible d'utiliser pour la réaliser des matériaux organiques fins. De tels matériaux ne pourraient être utilisés si la membrane était libérée avant le remplissage.

La souplesse de la membrane peut se caractériser par une déformation lors d'un actionnement supérieure à son épaisseur, ce qui correspond à un régime mécanique de grandes déformations.

De plus, la libération de la membrane après le remplissage est bien plus aisée que la libération avant le remplissage. Dans ce dernier cas, des contraintes fortes sont engendrées sur la manipulation des substrats à cause de la fragilité de la membrane et sur le choix des procédés à employer. Par exemple un procédé de gravure ionique réactive profonde ne peut être utilisé à cause de la différence de pression entre l'aspiration du porte-substrat et le vide de l'enceinte. Cette différence de pression pourrait engendrer une rupture de la membrane.

Au contraire, le fait de libérer la membrane après l'assemblage des substrats et le remplissage avec le fluide, comme dans le procédé de l'invention, permet d'utiliser les procédés propres aux microsystèmes.

Le procédé objet de l'invention permet également de mieux maîtriser la déformée de la membrane au repos et ce d'autant plus que le fluide est incompressible. La présence d'un fluide incompressible, c'est-à-dire un liquide ou un gel incompressible, est avantageuse par rapport aux configurations avec un fluide compressible car la membrane peut s'appuyer sur le fluide incompressible sans souffrir des effets de différences de pression entre les deux faces de la membrane. Cela permet d'éviter des éclatements de membrane dues à la force exercée par le fluide lorsque le dispositif est mis sous vide, lors de l'étape de retrait du substrat par gravure ionique réactive ou d'avoir des effets de collage de la membrane au fond de la cavité si la pression dans la cavité est trop faible en fin de procédé.

Par rapport à la demande de brevet FR 2 919 073, puisqu'on n'utilise pas de matériau sacrificiel dans la cavité, on ne risque pas d'être gêné par des restes de matériau sacrificiel que l'on ne peut pas éliminer.

Bien que plusieurs modes de réalisation de la présente invention aient été représentés et décrits de façon détaillée, on comprendra que différents changements et modifications puissent être apportés sans sortir du cadre de l'invention.

Les différentes variantes décrites doivent être comprises comme n'étant pas exclusives les unes des autres.

### DOCUMENTS CITÉS

[1] « Microfluidic design and fabrication of wafer-scale varifocal liquid lens » Jeong Yub Lee et al., Proceedings of SPIE 7426, 7426231-11 (2009).
[2] « Liquid-filled varifocal lens on a chip » Seung Tae Choi et al., Proceedings of SPIE 7208, 72080P1-9 (2009).
[3] « Polymer thin film deposited on liquid for varifocal encapsulated liquid lenses » Nguyen Binh-Khiem et al. Appl. Phys. Lett. Volume 93, Issue 12, pages 124101 à 124101-3 (2008) .

## Revendications

1. Procédé de réalisation d'un dispositif à membrane contribuant à emprisonner un fluide contenu dans une cavité (114) dans lequel :
on fournit deux substrat (110, 120),
on dispose une membrane (111) sur l'un et/ou l'autre des substrats,
on forme une ou plusieurs parois (113) contribuant à délimiter latéralement la cavité (114), ces parois étant situées sur ou dans l'un et/ou l'autre des substrats, cette cavité étant destinée à contenir le fluide,
on assemble les deux substrats (110, 120) l'un à l'autre en les superposant de manière à parfaire la cavité (114), la membrane (111) ou chaque membrane contribuant également à délimiter la cavité (114),
on emprisonne du fluide incompressible (117) dans la cavité entre les substrats, la membrane ou chaque membrane étant baignée par le fluide,
on ôte au moins une partie de l'un des substrats et/ou de l'autre des substrats, dans la mesure où une membrane a été disposée sur ladite partie, pour libérer au moins une partie centrale de ladite membrane, du substrat sur lequel elle a été disposée, la membrane étant au moins en partie maintenue par le fluide dans sa partie centrale lors de sa libération.

2. Procédé selon la revendication 1, dans lequel on dépose le fluide (117) sur l'un des substrats (120) ou on le répartit sur les deux substrats (110, 120) avant l'assemblage des deux substrats.

3. Procédé selon la revendication 1, dans lequel on introduit le fluide (117) dans la cavité (114) une fois que les deux substrats (110, 120) sont assemblés.

4. Procédé selon la revendication 3, dans lequel l'introduction se fait par l'intermédiaire d'au moins un trou traversant (122) dans un des substrats et/ou dans une paroi.

5. Procédé selon l'une des revendications 1 à 4, dans lequel on insère une couche tampon (119) entre l'un des substrats et la membrane et/ou entre l'autre des substrats et la membrane, cette couche tampon ayant une contrainte en tension voulue de manière à ce que la membrane ait une contrainte en tension déterminée lors de sa libération.

6. Procédé selon la revendication 5, dans lequel on élimine la couche tampon (119) pour libérer la membrane au moins dans sa partie centrale.

7. Procédé selon l'une des revendications 1 à 6, dans lequel on équipe la membrane (111) et/ou l'un des substrats d'au moins un instrument (112.1, 112.2).

8. Procédé selon la revendication 7, dans lequel l'instrument est en contact avec le fluide.

9. Procédé selon l'une des revendications 1 à 8, dans lequel la formation des parois (113) sur l'un des substrats se fait par dépôt d'un matériau en cordon, ce matériau pouvant être adhésif, et/ou par gravure du substrat et/ou par dépôt d'une couche de modelage sur le substrat puis gravure de la couche de modelage et/ou par utilisation d'une couche de modelage préformée.

10. Procédé selon l'une des revendications 1 à 9, dans lequel la membrane (111) se fait par dépôt chimique en phase vapeur, si elle est minérale ou en parylène, ou bien, par dépôt à la tournette ou par placage d'un film, si elle est organique.

11. Procédé selon l'une des revendications 1 à 10, dans lequel l'assemblage des deux substrats se fait par collage.

12. Procédé selon l'une des revendications 2 ou 3, dans lequel on dépose le fluide ((117) ou on l'introduit par une technique dite de dispense ou bien par projection.

13. Procédé selon l'une quelconque des revendications précédentes, dans lequel le fluide est un liquide ou un gel.

## Patentansprüche

1. Verfahren zur Herstellung einer Vorrichtung mit einer Membran, die dazu beiträgt, ein in einem Hohlraum (114) enthaltenes Fluid einzuschließen, wobei bei diesem:
zwei Substrate (110, 120) bereitgestellt werden,
eine Membran (111) auf dem einen und/oder dem anderen der Substrate angeordnet wird,
eine oder mehrere Wände (113) ausgebildet werden, die dazu beitragen, den Hohlraum (114) seitlich zu begrenzen, wobei sich die Wände auf oder in dem einen und/oder dem anderen der Substrate befinden, wobei der Hohlraum dazu bestimmt ist, das Fluid zu umschließen,
die beiden Substrate (110, 120) zusammenmontiert werden, indem diese übereinandergelegt werden, derart, dass der Hohlraum (114) fertiggestellt wird, wobei die Membran (111) oder jede Membran gleichermaßen zu einer Begrenzung des Hohlraums (114) beiträgt,
das inkompressible Fluid (114) in dem Hohlraum zwischen den Substraten eingeschlossen wird, wobei die Membran oder jede Membran durch das Fluid benetzt wird,
mindestens ein Teil des einen der Substrate und/oder des anderen der Substrate entfernt wird, insoweit als ein Anordnen einer Membran auf diesem Teil erfolgt war, um zumindest einen mittleren Teil der Membran von dem Substrat, auf dem sie angeordnet wurde, zu befreien, wobei die Membran während ihrer Freilegung in ihrem mittleren Teil zumindest teilweise durch das Fluid gehalten wird.

2. Verfahren nach Anspruch 1, bei dem das Fluid (114) auf das eine der Substrate (120) eingebracht wird oder es auf die zwei Substrate (110, 120) aufgeteilt wird, und zwar vor dem Zusammenfügen der beiden Substrate.

3. Verfahren nach Anspruch 1, bei dem das Fluid (117) in den Hohlraum (114) eingebracht wird, erst wenn das Zusammenfügen der beiden Substrate (110, 120) erfolgt ist.

4. Verfahren nach Anspruch 3, bei dem das Einbringen mittels mindestens eines Durchgangsloches (122) erfolgt, das sich in einem der Substrate und/oder in einer Wand befindet.

5. Verfahren nach einem der Ansprüche 1 bis 4, bei dem eine Pufferschicht (119) zwischen das eine der Substrate und die Membran und/oder zwischen das andere der Substrate und die Membran eingefügt wird, wobei diese Pufferschicht eine beabsichtigte Zugspannung aufweist, so dass die Membran bei ihrer Freilegung eine bestimmte Zugspannung aufweist.

6. Verfahren nach Anspruch 5, bei dem die Pufferschicht (119) entfernt wird, um die Membran zumindest in ihrem mittleren Teil freizulegen.

7. Verfahren nach einem der Ansprüche 1 bis 6, bei dem die Membran (111) und/oder eines der Substrate mit mindestens einer Vorrichtung (112.1, 112.2) ausgerüstet wird.

8. Verfahren nach Anspruch 7, bei dem sich die Vorrichtung in Kontakt mit dem Fluid befindet.

9. Verfahren nach einem der Ansprüche 1 bis 8, bei dem die Ausbildung der Wände (113) auf dem einen der Substrate durch Aufbringen eines Strangmaterials erfolgt, wobei dieses Material ein Adhäsivmaterial sein kann, und/oder durch Ätzen des Substrates und/oder durch Ablagern einer Modellierschicht auf dem Substrat, gefolgt von einem Ätzen der Modellierschicht, und/oder durch Verwendung einer vorgeformten Modellierschicht erfolgt.

10. Verfahren nach einem der Ansprüche 1 bis 9, bei dem die Membran (111) mittels chemischer Gasphasenabscheidung ausgebildet wird, falls sie mineralisch ist, oder als Parylen, oder auch mittels eines Dreh-Beschichtungsverfahrens oder mittels eines Plattierungsauftrags eines Films ausgebildet wird, falls sie organisch ist.

11. Verfahren nach einem der Ansprüche 1 bis 10, bei dem das Zusammenfügen der beiden Substrate durch Verkleben erfolgt.

12. Verfahren nach einem der Ansprüche 2 oder 3, bei dem das Einbringen oder Einleiten des Fluids (117) mittels eines sogenannten Spenderverfahrens oder auch durch Schleudern erfolgt.

13. Verfahren nach einem der vorhergehenden Ansprüche, bei das Fluid eine Flüssigkeit oder ein Gel ist.

## Claims

1. Method for producing a device with a membrane used to encapsulate a fluid contained in a cavity (114), wherein:
two substrates (110, 120) are provided;
a membrane (111) is placed on one and/or on the other of the substrates;
one or more walls (113) are formed, helping to laterally define the cavity (114), in which said walls are located on or in one of the substrates and/or on or in the other of the substrates, and said cavity is intended to contain the fluid,
the two substrates (110, 120) are assembled together by superimposing one on the other so as to complete the cavity (114), in which the or each membrane (111) also helps to define the cavity (114),
the fluid (117) is encapsulated in the cavity between the substrates, and the or each membrane is soaked by the fluid,
at least a portion of one of the substrates and/or the other of the substrates is removed insofar a membrane has been place on said portion, in order to release at least a central portion of said membrane, and the membrane is at least partially supported by the fluid in its central portion as it is released.

2. Method according to claim 1, wherein the fluid (117) is deposited on one of the substrates (120) or it is distributed over the two substrates (110, 120) before the two substrates are assembled.

3. Method according to claim 1, wherein the fluid (117) is introduced into the cavity (114) once the two substrates (110, 120) are assembled.

4. Method according to claim 3, wherein the introduction is performed by means of at least one through-hole (122) in one of the substrates and/or in a wall.

5. Method according to one of claims 1 to 4, wherein a buffer layer (119) is inserted between one of the substrates and the membrane and/or between the other of the substrates and the membrane, in which said buffer layer has a desired tensile stress so that the membrane has a determined tensile stress when it is released.

6. Method according to claim 5, wherein the buffer layer (119) is removed in order to release the membrane at least in the central portion thereof.

7. Method according to one of claims 1 to 6, wherein the membrane (111) and/or one of the substrates is equipped with at least one instrument (112.1, 112.2).

8. Method according to claim 7, wherein the instrument is in contact with the fluid.

9. Method according to one of claims 1 to 8, wherein the formation of the walls (113) on one of the substrates is performed by deposition of a material in a bead, which material can be adhesive, and/or by etching of the substrate and/or by depositing a modeling layer on the substrate, then etching the modeling layer and/or by using a preformed modeling layer.

10. Method according to one of claims 1 to 9, wherein the membrane (111) is produced by chemical vapor deposition if it is inorganic or in parylene or by spin coating or by plating a film if it is organic.

11. Method according to one of claims 1 to 10, wherein the assembly of the two substrates is performed by bonding.

12. Method according to one of claims 2 or 3, wherein the fluid (117) is deposited or introduced by a so-called dispensing technique or by spraying.

13. Method according to any one of the previous claims, wherein the fluid is a liquid, a gas or a gel.
